# FASCICULE DE BREVET EUROPEEN

(11) **EP 0 627 388 B1**
(45) Date de publication et mention de la délivrance du brevet: **19.07.2000**
(21) Numéro de dépôt: 94400823.4
(22) Date de dépôt: 14.04.1994
(51) Int. Cl.: C03B 5/027, C03B 5/00, B09B 3/00, C03B 5/12, C03B 5/26, C03B 5/20

(54) **Procédé pour la vitrification de résidus**
Verfahren zum Verglasen von festem Abfall
Process for vitrifying solid waste

(30) Priorité: 01.06.1993 FR 9306523
(43) Date de publication de la demande: 07.12.1994
(73) Titulaire: CONSTRUCTIONS INDUSTRIELLES DE LA MEDITERRANEE- CNIM, F-75008 Paris (FR)
(72) Inventeur: Durand, Jean-Pierre, F-83500 La Seyne (FR); Tabaries, Frank, F-83000 Toulon (FR); Lehaut, Christophe, F-83000 Toulon (FR)
(74) Mandataire: Thinat, Michel

(56) Documents cités:
- EP-A- 0 137 579
- EP-A- 0 301 951
- EP-A- 0 551 056
- WO-A-90/09211
- WO-A-92/15531
- WO-A-93/05894
- DE-A- 2 003 544
- DE-A- 4 013 314
- FR-A- 2 668 726
- US-E- R E30 521

## Description

La présente invention concerne un procédé de vitrification de résidus solides issus de l'incinération des déchets ménagers et/ou industriels et plus particulièrement des résidus issus de l'épuration des fumées d'incinération de déchets ménagers ou industriels.

On connait déjà un procédé de vitrification de résidus solides issus de l'incinération des déchets ménagers et/ou industriels consistant à porter les résidus à une température élevée afin de réaliser leur fusion, puis, à refroidir rapidement ces résidus pour obtenir un verre.

Un tel procédé est par exemple décrit dans la demande de brevet européen n° EP-A-0 551 056 qui appartient à l'état de la technique tel que défini à l'Article 54(3) CBE à la présente demande. La demande de brevet WO-A-90 09 211 décrit également un tel procédé. Dans ces deux demandes de brevet, les résidus solides sont fondus pour former une ou plusieurs phases liquides, cette ou ces phases liquides étant ensuite évacuées en totalité.

La demande de brevet FR 2 668 726 décrit l'application d'un tel procédé à la destruction de fibres d'amiante.

Mais, dans tous ces procédés, qui utilisent une température élevée, il se produit une libération de polluants tels que des chlorures, des oxydes de soufre et des métaux lourds, par des réactions de vaporisation et de décomposition.

Il a été proposé dans la demande de brevet WO 92/15531 de fondre en continu un mélange d'oxydes pour former une phase liquide et une phase solide supérieure, afin de maintenir les polluants libérés sous la couche solide. Cependant ce procédé n'empêche pas la libération des polluants.

Par ailleurs, les réactions de décomposition et de vaporisation des polluants ont déjà été évitées par l'utilisation d'additifs à très bas point de fusion. Mais la différence de température entre la température de fusion des résidus et la température de fusion des additifs entraîne que pour une faible variation de composition donnée du mélange résidus/additif, due en particulier à une variation de la composition des résidus, la variation de température de fusion de ce mélange sera importante.

Or, la variation importante de la composition et de la nature des résidus à traiter oblige à travailler à une température très supérieure à la température de fusion du mélange résidus/additif, et empêche par conséquent le piégeage des polluants nocifs pour l'environnement.

De plus, l'ajout de ces additifs à bas point de fusion augmente l'agressivité du bain de fusion, et, rend nécessaire l'utilisation de revêtements haut de gamme pour les parois du four de fusion.

Par ailleurs, les fours de fusion connus ou en développement sont chauffés de différentes manières, par exemple par des brûleurs à gaz ou au fuel avec ou sans ajout d'oxygène, par torche à plasma, par plasma à arc transféré, par induction ou par effet joule par électrodes immergées.

Les chauffages par brûleurs, arc ou plasma chauffent la masse de verre par sa surface libre par rayonnement et convection. Les températures dans le four sont alors très différentes suivant qu'on les mesure près ou loin des organes chauffants.

Les chauffages par induction ou électrodes immergées chauffent le verre dans sa masse. De ce fait, les températures sont beaucoup plus homogènes.

Mais lorsqu'on veut fonctionner à une température à peine supérieure à la température de fusion, le mélange à fondre qui est introduit sur la surface du bain forme une croute frittée qu'il est difficile de fondre à moins d'employer des températures très supérieures aux températures recherchées.

Dans les deux cas, il est difficile de maîtriser la température du bain et de la limiter à une valeur bien déterminée.

L'invention a pour but de pallier les inconvénients précédents en proposant un procédé de vitrification de résidus solides issus de l'incinération des déchets ménagers et/ou industriels du type consistant à fondre les résidus puis à les refroidir rapidement pour former un verre, caractérisé en ce qu'avant le refroidissement rapide, on maintient un bain fondu à une température T₁ supérieure de 50°C à 200°C à la température T₂ voulue pour la fusion desdits résidus à vitrifier, puis on répartit sur la surface de ce bain fondu lesdits résidus à vitrifier, résidus qui, au contact du bain fondu forment une couche visqueuse intermédiaire de résidus fondus, et enfin on évacue seulement la couche visqueuse intermédiaire de résidus fondus par un système de déverse placé dans le sein du bain fondu, avec comme condition que le temps de contact entre le bain fondu et la couche de résidus fondus n'excède pas 15 mn.

Selon une caractéristique de ce procédé, la température T₂ est supérieure de 50°C au maximum à la température de fusion T des résidus à traiter.

Selon une autre caractéristique du procédé, le bain fondu a la même composition que les résidus solides à traiter.

Selon encore une autre caractéristique du procédé, avant traitement, les résidus à vitrifier sont mélangés avec un additif afin de former un mélange M dont la température de fusion est inférieure à la température de fusion T des résidus à vitrifier.

Dans ce cas, 45% de la masse sèche du mélange M est constituée d'un mélange M₂ dont la composition est comprise dans la zone délimitée par l'isotherme 1400°C des nappes de liquidus du diagramme des phases ternaires SiO₂-Al₂O₃-CaO.

La masse sèche de l'additif est de préférence constituée d'au moins 60% en poids d'un mélange M₁ de SiO₂, Al₂O₃, CaO.

Ce mélange M₁ comprend entre environ 55% et environ 75% en poids de SiO₂, entre environ 5% et environ 30% en poids de Al₂O₃ et entre environ 5% et environ 35% en poids de CaO.

Des additifs particuliers sont le mâchefer, la pouzzolane, le basalte.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemples et illustrant plusieurs modes de réalisation de l'invention et dans lesquels :

La figure 1 représente le diagramme des phases ternaires CaO-SiO₂-Al₂O₃ où les proportions en chacun des constituants sont donnés en pourcentage massique.

La figure 2 représente un premier mode de réalisation du four de fusion utilisé dans le procédé de l'invention.

La figure 3 représente un second mode de réalisation du four de fusion utilisé dans le procédé de l'invention.

Le procédé de vitrification selon l'invention consiste à maintenir les produits solides à vitrifier à l'état visqueux afin de piéger les polluants à l'intérieur du verre ainsi formé.

Pour cela, l'invention propose un procédé permettant de limiter la température et la viscosité des déchets fondus et d'évacuer lesdits déchets avant que leur viscosité ne devienne trop faible pour retenir les polluants. Un dispositif pour utilisation dans ce procédé est également décrit ici.

La viscosité appropriée pour retenir les polluants est la viscosité obtenue lorsque la différence de température entre la température T₁ à laquelle les produits solides à traiter sont portés et leur température de fusion n'excède pas 50°C.

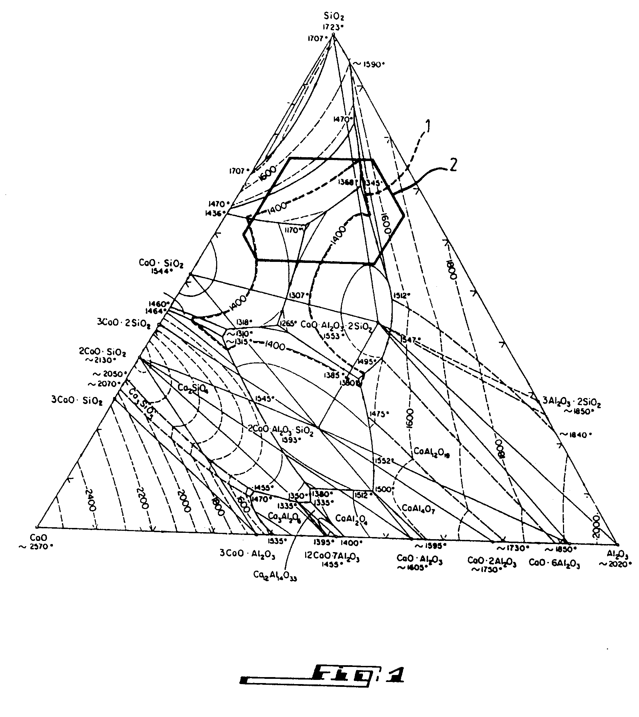

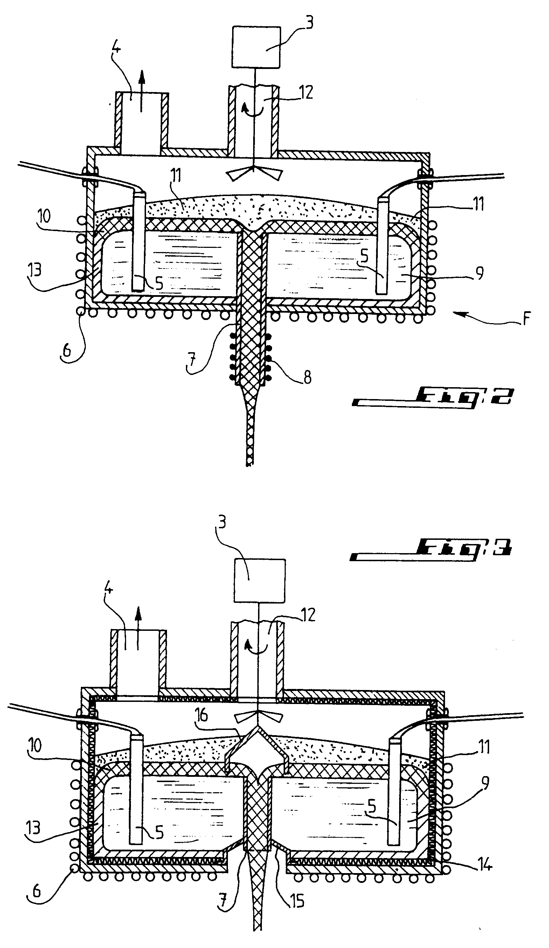

Pour maintenir un tel écart de température, et en se référant à la figure 2, un bain fondu 9, placé dans le four de fusion F, est maintenu à une température T₂ supérieure de 50°C à 200°C à la température T₁ à laquelle on veut traiter les résidus, par des moyens de chauffage 5 constitués de préférence par des électrodes immergées dans le bain 9. La température du bain 9 peut être contrôlée par un thermocouple et maintenue constante par action sur l'alimentation électrique.

Un dispositif de déverse 7 constitué de un ou plusieurs tubes, par exemple cylindriques, est placé au sein du bain fondu 9. L'orifice supérieur du ou des tubes cylindriques constituant le dispositif de déverse 7 doit arriver au niveau de la surface du bain fondu 9.

Les produits solides 11 à fondre sont introduits par un orifice d'introduction de produits 12 et répartis à la surface du bain fondu 9 par un système répartiteur 3, par exemple tournant.

Les produits solides à fondre 11, du fait de leur densité appararente plus faible que celle du bain fondu 9 restent à la surface de bain fondu 9, c'est-à-dire juste au-dessus du niveau du ou des orifices des tubes constituant le système de déverse 7.

La température des produits solides 11 augmente au contact du bain fondu 9 par conduction et rayonnement. Il se forme ainsi entre la surface du bain fondu 9 et la couche de produits 11 non fondus une couche de produits fondus 10.

Dès que la température de fusion est atteinte, la couche 10 atteint une viscosité suffisante pour s'écouler par le ou les tubes constituant le système de déverse 7 et quitte le four sous forme d'un filet pâteux.

Cette disposition permet donc d'évacuer du four les produits solides à traiter dès que leur température atteint la température de fusion.

Le système est auto-stable puisque la vitesse d'écoulement augmente avec la température : il n'y a donc pas de surchauffe locale possible. Le bain fondu 9 peut être constitué de tous composés permettant d'atteindre la température T₂ désirée mais de préférence, il sera constitué d'une masse de produit ayant la même composition que les solides 11 à traiter.

Le bain fondu 9 est chauffé à température élevée et perd ces polluants mais ceci n'est pas un inconvénient car ce bain n'est pas renouvelé.

L'expérience montre que la température de la couche de produits fondus 10 n'excède pas la température de fusion de plus de 50°C, que sa viscosité est telle qu'elle s'écoule par le trou de coulée du système de déverse 7 et que les polluants sont retenus dans sa masse.

La couche de produits non encore fondus 11 crée un écran protecteur en surface de sorte que la température de la voûte du four et du dispositif de répartition des produits introduits reste modeste (de l'ordre de 200°C à 300°C).

De plus, cette couche 11 relativement froide retient les quelques polluants qui pourraient s'échapper des couches sous-jacentes.

L'expérience montre que les produits de la couche de produits non encore fondus 11 ne sont pas entraînés dans le trou de coulée du système de déverse 7 lors de l'écoulement de la couche de produits fondus 10, à condition que le trou de coulée soit assez petit et le débit de fusion assez grand.

Les tubes de coulée 7 sont chauffés sur leurs parties extérieures au four par un système de chauffage 8 premièrement afin de conserver aux produits fondus 10 une viscosité suffisante pour ne pas boucher ces tubes et deuxièmement pour qu'ils puissent continuer à s'écouler jusqu'au système prévu de récupération du produit solide. Ce système peut être en particulier un système de trempe, etc.

Si l'orifice de coulée est choisi de plus grande dimension, ou si le débit du four doit être modulé (c'est-à-dire que le débit peut devenir faible), alors on peut ajouter le dispositif représenté en figure 3 : il suffit de placer au-dessus des orifices des tubes constituant le système de déverse 7 un couvercle de protection 16 relié soit au système répartiteur de produits 3, soit à la sole supérieure du four de fusion F soit au système de déverse. La partie inférieure du couvercle 16 arrivera de préférence juste au-dessus du niveau du bain fondu 9.

Ce couvercle 16 a pour but de créer un siphon que ne peuvent pas franchir les produits pulvérulents 11.

Le four de fusion représenté en figure 2 et en figure 3 comporte de plus un orifice d'évacuation des gaz 4 et un dispositif de refroidissement 6 des parois du four, ceci afin de créer une couche de produits solidifiés 13 qui sert de creuset et protège les parois du four des agressions chimiques dues à la fusion des produits solides 11.

La paroi peut être chaude, c'est-à-dire non refroidie mais il y aura alors des difficultés à trouver des réfractaires résistants aux conditions de fonctionnement.

Un mode particulier de réalisation d'un four de fusion utilsé dans le procédé de l'invention est illustré en figure 3.

Ce mode particulier consiste à donner une configuration spéciale à la partie inférieure du ou des tubes constituant le système de déverse 7.

Cette disposition comprend une chemise thermique 15 qui assure la liaison entre ledit tube constituant le système de déverse 7 et l'enveloppe du four et la transition de température correspondante.

Une couche de produits réfractaires 14 a été intercalée entre la paroi du four et la couche de produits solidifiés 13 afin d'allonger un peu la zone de transition thermique.

Cette disposition permet de supprimer le moyen de chauffage 8 représenté en figure 2 puisque le tube constituant le système de déverse 7 est chauffé par le bain fondu 9 jusqu'à sa base.

Dans tous les cas, lorsque la capacité du four devient grande, il se peut que le temps de parcours des produits fondus 10 entre le point le plus éloigné et l'orifice du système de déverse 7 soit trop grand et que la température dépasse de plus de 50°C la température de fusion. On dispose alors plusieurs tubes de coulée afin de limiter le parcours, donc le temps de séjour, donc les températures.

Dans tous les cas, il faudra limiter le temps de contact de la couche de produits fondus 10 avec le bain fondu 9 à au maximum un quart d'heure.

La couche de produits 10 coulant à travers le système de déverses 7 est ensuite refroidie rapidement par tous moyens appropriés pour former un produit vitrifié dans lequel les polluants sont piégés.

Des variations dans la composition des produits solides 10 à traiter peuvent se produire et entraîner une variation de la température de fusion de ces produits. Il est alors approprié d'ajouter avant traitement, un additif à ce produit solide afin d'obtenir un mélange M dont la composition pourra varier sans que cela implique une grande variation de leur température de fusion.

Ainsi, la masse sèche du mélange M constitué de l'additif et des résidus à traiter 10 devra être constitué d'environ 45% en poids d'un mélange M₂ d'oxydes de silicium, d'alumium et de calcium. Ce mélange M₂ dont la composition chimique est normée à 100 a son point représentatif à l'intérieur de la zone 1 délimitée par l'isotherme 1400°C des nappes de liquidus du diagramme ternaire CaO-SiO₂-Al₂O₃ représenté en figure 1.

En effet, la zone 1 est une zone à faible pente de liquidus et donc pour une même variation de composition des produits solides à traiter, la différence de température entre la température à laquelle est portée le mélange additif/ produits à traiter 10 et la température de fusion de tous les constituants de ce mélange sera beaucoup faible qu'avec l'utilisation d'un additif à bas point de fusion.

La masse sèche de l'additif utilisée ici est constituée d'environ 60% en poids d'un mélange M₁ d'oxyde de silicium, d'aluminium et de calcium, et d'environ 40% en poids d'oxyde tels que des oxydes de sodium, de potassium et de fer.

Sur la figure 1, on voit également une seconde zone 2, de forme hexagonale, délimitant la composition du mélange M₁ en oxyde de silicium, d'alumium et de calcium.

Les 60% en poids d'oxyde de silicium, d'alumium et de calcium du mélange M₁ sont normés à 100. L'oxyde de silicium est compris entre environ 55% et environ 75% en poids, l'oxyde d'aluminium est compris entre environ 5% et environ 30% en poids, et l'oxyde de calcium est compris entre environ 5% et environ 35% en poids.

Les carbonates et les oxydes de calcium sont exprimés en équivalent oxyde de CaO et les sels de calcium tels que les chlorures et les sulfates sont comptabilisés séparément des oxydes de calcium. En effet, l'hydroxyde de calcium Ca(OH)₂ et le carbonate de calcium CaCO₃ se décomposent respectivement à des températures d'environ 580°C et d'environ 850°C sous air à la pression atmosphérique pour former l'oxyde de calcium CaO.

L'additif pourra être constitué plus particulièrement dans le cas du traitement de déchets issus de l'incinération de produits ménagers et/ou industriels par du mâchefer, de la pouzzolane, ou du basalte.

Dans le cas où on ajoute un tel additif, ce sera bien entendu le mélange M constitué de l'additif et des produits solides 11 à traiter qui sera introduit à la surface du bain fondu 9. Et le bain fondu 9 sera de préférence constitué du même mélange M.

Le produit solide obtenu grâce à ce procédé et ce dispositif est constitué par une masse vitreuse constituée d'oxydes dans laquelle sort piégés, sous forme d'inclusions finement dispersées, les sels tels que les chlorures de sodium, de potassium et de calcium et les sulfates de calcium ou analogues et de métaux lourds néfastes pour l'environnement.

Ce produit solide peut piéger une masse des sels précités pouvant aller jusqu'à une masse égale à sa propre masse.

Ainsi, bien que le procédé de l'invention n'ai été décrit ici qu'en référence à la vitrification des résidus solides issus de l'incinération des déchets ménagers et/ou industriels, il pourrat être utilisé également sans sortir du cadre de l'invention dans tous les cas où il est nécessaire de traiter des produits solides à une température peu supérieure à la température de fusion ou de les maintenir lors de leur fusion à une viscosité particulière.

## Revendications

1. Procédé de vitrification de résidus solides issus de l'incinération des déchets ménagers et/ou industriels du type consistant à fondre les résidus puis à les refroidir rapidement pour former un verre, caractérisé en ce qu'avant le refroidissement rapide, on réalise les étapes suivantes :
- maintien d'un bain fondu (9) à une température (T₁) supérieure de 50 à 200°C à la température (T₂) voulue pour la fusion desdits résidus à vitrifier,
- répartition sur la surface du bain fondu (9) des résidus (11), qui au contact du bain fondu forment une couche visqueuse intermédiaire de résidus fondus (10),
- évacuation de seulement la couche visqueuse intermédiaire de résidus fondus (10) par un système de déverse (7) placé dans le bain fondu (9),
avec comme condition que le temps de contact entre le bain fondu (9) et la couche de résidus fondus (10) n'excède pas 15 mn.

2. Procédé selon la revendication 1, caractérisé en ce que la température (T₂) est supérieure au maximum de 50°C à la température de fusion T des résidus (11).

3. Procédé selon la revendication 1 ou 2, caractérisé en ce que le bain fondu (9) a la même composition que les résidus solides (11) à fondre.

4. Procédé selon l'une des revendications précédentes, caractérisé en ce que les résidus (11) sont mélangés avec un additif de façon à former un mélange (M) que l'on verse sur le bain fondu (9).

5. Procédé selon la revendication 4, caractérisé en ce qu'environ 45% en poids de la masse sèche du mélange (M) est constituée d'un mélange (M₂) dont la composition est comprise dans la zone (1) du diagramme des phases ternaires SiO₂-Al₂O₃-CaO, délimitée par l'isotherme 1400°C des nappes de liquides de ce diagramme.

6. Procédé selon la revendication 4 ou 5, caractérisé en ce que la masse sèche de l'additif est constituée d'au moins 60% en poids d'un mélange (M₁) de SiO₂, Al₂O₃, CaO.

7. Procédé selon la revendication 6, caractérisé en ce que le mélange (M₁) comprend entre environ 55% et environ 75% en poids de SiO₂, entre environ 5% et environ 30% en poids de Al₂O₃ et entre environ 5% et environ 35% en poids de CaO.

8. Procédé selon l'une des revendications 4 à 7, caractérisé en ce que l'additif est choisi parmi le mâchefer, la pouzzolane, le basalte.

## Claims

1. Process for vitrifying solid waste coming from incineration of house and/or industrial waste of the type consisting in melting the waste then cooling them rapidly for forming a vitrous mass, characterized in that, before the rapid cooling, the following steps are made :
- maintaining a molten bath (9) at a temperature (T₁) higher by 50 - 200°C to the temperature (T₂) provided for melting said waste to be vitrified,
- distributing the waste (11) on the surface of the molten bath (9), which waste upon contacting the molten bath forms an intermediary viscous layer of molten waste (10),
- evacuating only the intermediary viscous layer of molten waste (10) by means of a discharge system (7) placed in the molten bath (9),
with, as a condition, that the contacting time between the molten bath (9) and the molten waste layer (10) does not exceed 15 min.

2. Process according to claim 1, characterized in that the temperature (T₂) is higher by a maximum of 50°C to the melting temperature T of the waste (11).

3. Process according to claim 1 or 2, characterized in that the molten bath (9) has the same composition as the solid waste (11) to be molten.

4. Process according to one of the preceding claims, characterized in that the waste (11) is mixed with an additive in order to form a mixture (M) that is poured on the molten bath (9).

5. Process according to claim 4, characterized in that about 45% by weight of the dry mass of the mixture (M) is formed by a mixture (M₂) having a composition that is comprised in the zone (1) of the ternary phase SiO₂-Al₂O₃-CaO diagram, limited by the 1400°C isotherm of the liquid sheets of this diagram.

6. Process according to claim 4 or 5, characterized in that the dry mass of the additive is formed by at least 60% by weight of a mixture (M₁) of SiO₂, Al₂O₃, CaO.

7. Process according to claim 6, characterized in that the mixture (M₁) comprises between about 55% and about 75% by weight of SiO₂, between about 5% and about 30% by weight of Al₂O₃ and between about 5% and about 35% by weight of CaO.

8. Process according to one of claims 4 to 7, characterized in that the additive is chosen among slag, pozzolana, basalt.

## Patentansprüche

1. Verfahren zum Verglasen von aus der Verbrennung von Haushaltsmüll und / oder Industriemüll entstandenem festem Abfall, der Art bestehend aus dem Schmelzen des Abfalls und dem anschließenden schnellen Abkühlen zur Bildung eines Glases, dadurch gekennzeichnet, daß man vor dem schnellen Abkühlen folgende Schritte durchführt:
- Aufrechterhaltung eines Schmelzbades (9) bei einer Temperatur (T₁), die um 50 bis 200°C über einer für die Verschmelzung besagten zu verglasenden Abfalls gewünschten Temperatur (T₂) liegt,
- Verteilung des Abfalls (11) auf der Oberfläche des Schmelzbades (9), der beim Kontakt mit dem Schmelzbad eine zähflüssige Zwischenschicht aus geschmolzenen Abfall (10) bildet,
- Austragen von nur der zähflüssigen Zwischenschicht aus geschmolzenen Abfall (10) durch ein in dem Schmelzbad (9) eingebrachtes Ableitsystem (7),
mit der Bedingung, daß die Zeit des Kontakts zwischen dem Schmelzbad (9) und der Schicht aus geschmolzenem Abfall (10) 15 min. nicht übersteigt.

2. Verfahren gemäß Anspruch 1, dadurch gekennzeichnet, daß die Temperatur (T₂) maximal um 50°C über der Schmelztemperatur des Abfalls (11) liegt.

3. Verfahren gemäß Anspruch 1 oder 2, dadurch gekennzeichnet, daß das Schmelzbad (9) die gleiche Zusammensetzung hat wie der zu schmelzende feste Abfall (11).

4. Verfahren gemäß einem der vorherigen Ansprüche, dadurch gekennzeichnet, daß der Abfall (11) derart mit einem Zusatz vermischt wird, daß ein Gemisch (M) gebildet wird, das in das Schmelzbad (9) geschüttet wird.

5. Verfahren gemäß Anspruch 4, dadurch gekennzeichnet, daß rund 45% des Gewichts der Trockenmasse des Gemischs (M) aus einem Gemisch (M₂) gebildet werden, dessen Zusammensetzung in der Zone (1) des Diagramms der dreifachen Phasen SiO₂-Al₂O₃-CaO enthalten ist, die durch die Isotherme 1400°C der flüssigen Schichten dieses Diagramms begrenzt wird.

6. Verfahren gemäß Anspruch 4 oder 5, dadurch gekennzeichnet, daß die Trockenmasse des Zusatzes zu wenigstens 60% des Gewichts aus einem Gemisch (M₁) aus SiO₂, Al₂O₃, CaO gebildet wird.

7. Verfahren gemäß Anspruch 6, dadurch gekennzeichnet, daß das Gemisch (M₁) zwischen ungefähr 55 Gewichtsprozent und ungefähr 75 Gewichtsprozent SiO₂, zwischen ungefähr 5 Gewichtsprozent und ungefähr 30 Gewichtsprozent Al₂O₃ und zwischen ungefähr 5 Gewichtsprozent und ungefähr 35 Gewichtsprozent CaO umfaßt.

8. Verfahren gemäß einem der Ansprüche 4 bis 7, dadurch gekennzeichnet, daß der Zusatz aus Schlacke, Puzzolanerde, Basalt ausgewählt ist.
